# EUROPÄISCHE PATENTSCHRIFT

(11) **EP 2 817 215 B1**
(45) Veröffentlichungstag und Bekanntmachung des Hinweises auf die Patenterteilung: **29.03.2017**
(21) Anmeldenummer: 12770048.2
(22) Anmeldetag: 24.09.2012
(51) Int. Cl.: B60K 6/42, B63H 21/14, B63H 21/17, B63H 21/20, B63H 23/10

(54) **HYBRIDANTRIEB FÜR EIN WASSERFAHRZEUG**
HYBRID DRIVE FOR A WATER VEHICLE
ENTRAÎNEMENT HYBRIDE POUR BATEAU

(30) Priorität: 22.02.2012 DE 102012101427
(43) Veröffentlichungstag der Anmeldung: 31.12.2014
(73) Patentinhaber: Schottel GmbH, 56322 Spay/Rhein (DE)
(72) Erfinder: HÖFER, Volker, 56154 Boppard (DE)
(74) Vertreter: Wagner Albiger & Partner Patentanwälte mbB
(86) Internationale Anmeldenummer: PCT/EP2012/068796
(87) Internationale Veröffentlichungsnummer: WO 2013/124006

(56) Entgegenhaltungen:
- WO-A1-2006/095042
- WO-A1-2011/021727
- DE-A1- 19 647 948
- FR-A1- 2 949 751
- US-A- 5 028 210
- US-A1- 2008 113 570
- US-B1- 6 312 298

## Beschreibung

Die Erfindung betrifft einen Hybridantrieb für ein Wasserfahrzeug, umfassend einen im Inneren des Wasserfahrzeugs angeordneten und eine Antriebswelle antreibenden Primärantriebsmotor und ein der Antriebswelle nachgeordnetes Oberwassergetriebe mit Getriebegehäuse zum Antrieb einer vom Oberwassergetriebe abgehenden Vertikalwelle sowie mindestens einen elektrischen Sekundärantriebsmotor, mittels dessen die Vertikalwelle zusätzlich oder alternativ zum Primärantriebsmotor antreibbar ist.

Ein gattungsgemäßer Hybridantrieb ist beispielsweise aus der WO 2011/021727 A1 bekannt und dient dem Antrieb eines Ruderpropellers, dessen Propellerwelle außerhalb des Schiffsrumpfes liegt und über die Vertikalwelle vom im Innern des Wasserfahrzeugs angeordneten Primärantriebsmotor und/oder Sekundärantriebsmotor unter Zwischenschaltung des Oberwassergetriebes angetrieben wird. Über Kupplungen sind der üblicherweise als Verbrennungsmotor ausgebildete Primärantriebsmotor und der an einer zweiten Antriebswelle angeschlossene Elektromotor mit der Vertikalwelle in eine kraftschlüssige Verbindung bringbar, um je nach Einsatzbedingung des Wasserfahrzeugs mit dem Primärantriebsmotor oder dem elektrischen Sekundärantriebsmotor oder mit beiden Motoren zu fahren.

Eine ähnliche, ebenfalls mit zwei über Kupplungen wahlweise schaftbaren Antriebswellen für den Primärantriebsmotor und den Sekundärantriebsmotor arbeitende Anordnung ist aus der DE 10 2009 000 992 A1 bekannt.

Nachteil dieser bekannten Hybridantriebe ist es, dass die im Oberwassergetriebe vorgesehenen mehreren Antriebswellen mit zugeordneten Kupplungen einen hohen baulichen Aufwand darstellen, der nicht nur kostenintensiv ist, sondern auch entsprechenden Platzbedarf aufweist, so dass sich derartige Hybridantriebe bei beengten Einbauverhältnissen, beispielsweise in Hafenschleppern nur bedingt nutzen lassen und eine spezielle Auslegung des Schiffsrumpfes erfordern, wo hingegen die nachträgliche Ausrüstung eines lediglich mit einem Verbrennungsmotor als Primärantriebsmotor ausgebildeten Wasserfahrzeugs mit einem solchen Hybridantrieb in der Regel nicht oder nur mit großem Aufwand realisierbar ist.

Andererseits besteht in jüngerer Zeit ein verstärkter Bedarf nach derartigen Hybridantrieben insbesondere bei in Binnengewässern und Häfen eingesetzten Wasserfahrzeugen, z.B. innerhalb von Umweltsschutzzonen in Häfen, innerhalb derer mit hohen Teillasteinheiten gefahren wird. Beispielsweise zeigen die Einsatzprofile von Hafenschleppern hohe Zeitanteile mit geringer Leistung, so dass sich hybride Antriebskonzepte mit einem Dieselmotor für Pfahlzugbedingungen und einem Elektromotor für geringere Leistungsanforderungen anbieten, um energie- und ressourcenschonend zu arbeiten.

Aufgabe der Erfindung ist es daher, einen Hybridantrieb der eingangs genannten Art vorzuschlagen, der die Nachteile des Standes der Technik überwindet und sich durch eine besonders Platz sparende und kostengünstige Ausgestaltung auszeichnet.

Zur Lösung der gestellten Aufgabe wird erfindungsgemäß die Ausgestaltung eines Hybridantriebes gemäß den Merkmalen des Patentanspruchs 1 vorgeschlagen. Vorteilhafte Ausgestaltungen und Weiterbildungen der Erfindung sind Gegenstand der abhängigen Ansprüche.

Die Erfindung schlägt vor, den mindestens einen elektrischen Sekundärantriebsmotor mit einer Hohlwelle auszubilden, der nach einem Vorschlag der Erfindung als Innenläufer mit einer drehangetriebenen Hohlwelle und einem als Stator dienenden Motorgehäuse ist.

Ein wesentlicher Vorteil der erfindungsgemäßen Ausgestaltung besteht darin, dass der Sekundärantriebsmotor keinen zusätzlichen Zahneingriff benötigt, sondern der für den Primärantriebsmotor ohnehin vorhandenen Zahneingriff gleichsam mitnutzt. "Zahneingriff" im Sinne der Erfindung ist ein durch Zahneingriff eines Getriebes hergestellter Kraftfluss zwischen Antriebsmotor und Vertikalwelle für den Antrieb des Wasserfahrzeugs.

Der Sekundärantriebsmotor gemäß der Erfindung nutzt die für den Primärantriebsmotor vorhandenen und in Zahneingriff stehenden Getriebekomponenten mit, sodass eine bedeutende bauliche Vereinfachung erzielt wird.

In jedem Fall ist erfindungsgemäß vorgesehen, dass der Stator des Sekundärantriebsmotors, d.h. je nach Bauform das Motorgehäuse oder die Hohlwelle, drehmomentfest mit dem Getriebegehäuse des Oberwassergetriebes verbunden ist, so dass auf zusätzliche Aufnahmeräume und Befestigungen für den Sekundärantriebsmotor verzichtet werden kann. Der erfindungsgemäße Hybridantrieb lässt sich daher besonders platzsparend ausführen bzw. an bereits vorhandenen Primärantrieben nachrüsten.

Gemäß der Erfindung wird innerhalb der Hohlwelle des Sekundärantriebsmotors der dort zur Verfügung stehende Innenraum dazu genutzt, eine Kupplung der Antriebswelle aufzunehmen, d.h. ein Bauteil, welches bei konventioneller Konstruktion eines Oberwassergetriebes mit von einem Primärantriebsmotor angetriebener Antriebswelle ohnehin vorhanden ist. Mögliche Positionen für den elektrischen Sekundärantriebsmotor sind von daher die Krafteingangsseite, d.h. der Eintritt der Antriebswelle in das Oberwassergetriebe, die dem Krafteingang gegenüberliegende Seite oder die vertikalen Positionen auf dem Oberwassergetriebe, in welchen die Vertikalwelle endseitig geführt ist.

Der erfindungsgemäße Hybridantrieb kommt von sich aus aufgrund der Konstruktion des Sekundärantriebmotors mit Hohlwelle und am Getriebegehäuse des Oberwassergetriebes drehmomentfest verbundenen Stator ohne zusätzliche Dichtungen aus und erfordert keinen zusätzlichen Zahneingriff oder zusätzliche Wellen im Oberwassergetriebe. Auch wird keine eigene Kupplung für den Sekundärantriebsmotor benötigt.

Der Sekundärantriebsmotor kommt ferner auch ohne eigene Lagerungen aus, sondern integriert sich in die bereits vorhandene Lagerung den aus Primärantriebsmotor, Antriebswelle, Oberwassergetriebe und Vertikalwelle gebildeten Systems. Da aufgrund der erfindungsgemäßen Integration des Sekundärantriebsmotors der Kraftfluss unabhängig von der Nutzung des Primär- und/oder Sekundärantriebsmotors über lediglich einen Radsatz des Oberwassergetriebes erfolgt, fallen zusätzliche Einstellungen für den nicht mehr benötigten Radsatz des Sekundärantriebsmotors weg. Ferner sind keine lastfrei mitlaufenden Zahneingriffe z.B. beim abgeschaltetem Primär- oder Sekundärantriebsmotor vorhanden, was sich in geringeren Geräuschemissionen und einem höheren Wirkungsgrad des erfindungsgemäßen Hybridantriebs niederschlägt.

Bei dem erfindungsgemäß verwendeten elektrischen Sekundärantriebsmotor kann es sich um einen permanent erregten Synchronmotor, beispielsweise einen sogenannten Torquemotor handeln.

Torquemotoren sind an sich bekannt und werden beispielsweise als getriebelose Antriebsmotoren in Werkzeugmaschinen und Extrudern und Walzenantrieben der kunststoffverarbeitenden Industrie eingesetzt, da sie bei geringem Platzbedarf hohe Drehmomente bei einer definierten Drehzahlspanne ermöglichen. Ein derartiger Torquemotor besteht in der Ausführung als Innenläufer üblicherweise aus einem Stator mit Spulen, welcher vom Motorgehäuse gebildet wird und einem mit Dauermagneten besetzten Rotor, der von einer Hohlwelle gebildet wird. Bei Ausgestaltung als Außenläufer verfügt ein solcher Torquemotor über eine als Stator dienende Hohlwelle mit Spulen und einem mit den Dauermagneten besetzten Gehäuse als Rotor.

Im Rahmen der Erfindung wurde festgestellt, dass sich ein solcher Motor auch als elektrischer Sekundärantriebsmotor im Rahmen eines Hybridantriebes für Wasserfahrzeuge adaptieren lässt, da dieser nur geringen Platzbedarf aufweist, ein hohes Drehmoment im relevanten Drehzahlbereich bereitzustellen vermag und überdies aufgrund seiner spezifischen Gestaltung mit einer Hohlwelle sich besonders einfach in bestehende und bewährte Bauformen von Oberwassergetrieben integrieren lässt.

Da die Kupplung der zum Primärantriebsmotor führenden Antriebswelle in der Hohlwelle des Sekundärantriebsmotors angeordnet wird, kann der elektrische Sekundärantriebsmotor ohne eigene Kupplung in den Hybridantrieb integriert werden, so dass weitere Bauteileinsparungen und nochmals verringerter Platzbedarf die Folge sind. Alternativ kann der Sekundärantriebsmotor mit seiner Hohlwelle auch auf der Antriebswelle oder der Vertikalwelle angeordnet sein, so dass größtmögliche Flexibilität hinsichtlich der Einbaupositionen ermöglicht wird.

Der Begriff "Vertikalwelle" soll erfindungsgemäß nicht auf eine Welle mit exakt vertikaler Ausrichtung beschränkt verstanden werden, sondern umfasst auch solche Wellen, die eine von der Vertikalen abweichende Ausrichtung aufweisen.

Generell ist der erfindungsgemäße Hybridantrieb für alle Bauformen insbesondere azimutierender Schiffsantriebe geeignet.

Im Rahmen der Erfindung ist nicht nur vorgesehen, dass der elektrische Sekundärantriebsmotor gemeinsam mit dem Primärantriebsmotor, d.h. als so genannter Booster, den Antrieb mittels des Primärantriebsmotors unterstützen kann, um z.B. Drehmomentund Leistungsspitzen bereitzustellen, sondern es kann auch vorgesehen sein, bei entsprechender Auskupplung des Primärantriebsmotors einen rein elektrischen Betrieb mittels des Sekundärantriebsmotors sicherzustellen. Darüber hinaus kann in einer Ausführungsform der Erfindung auch vorgesehen sein, den Sekundärantriebsmotor in einer weiteren Betriebsart als Generator zu betreiben, um beispielsweise das Bordnetz des Wasserfahrzeugs mit elektrischer Energie zu versorgen oder aber Akkumulatoren für einen späteren elektrischen Antriebsbetrieb des Sekundärantriebsmotors aufzuladen.

Es versteht sich, dass der erfindungsgemäße Hybridantrieb nicht nur als Einzelantrieb, sondern auch mehrfach an einem entsprechenden Wasserfahrzeug vorhanden sein kann. In einer solchen Mehrfachkonfiguration bietet sich auch die Möglichkeit, den elektrischen Sekundärantrieb eines Hybridantriebes als Generator zu betreiben und mit der erzeugten elektrischen Energie einen rein elektrischen Antrieb des zweiten Hybridantriebes mittels des dort vorhandenen Sekundärantriebsmotors sicherzustellen. In einem solchen Betriebsmodus lässt sich trotz Antrieb über zwei erfindungsgemäße Hybridantriebe eine deutliche Verbrauchs- und Emissionsreduktion erreichen.

Der Sekundärantriebsmotor gemäß der Erfindung kann ferner auch als Starthilfe fungieren und den ausgekuppelten Wellenabschnitt auf eine Synchrondrehzahl mit der einzukuppelnden Welle beschleunigen, so dass im Ergebnis eine kleinere Kupplung oder gar eine Schaltkupplung anstelle einer Schlupfkupplung eingesetzt werden kann.

Der erfindungsgemäße Hybridantrieb kann an unterschiedlichen Bauformen eines Oberwassergetriebes vorgesehen werden. Generell wird im Rahmen der Erfindung unter einem Oberwassergetriebe das innerhalb des Schiffes oder Wasserfahrzeugs angeordnete Getriebe eines azimutierenden Antriebes verstanden.

Ein Beispiel eines solchen azimutierenden Antriebes ist ein Ruderpropeller. Hierbei kann der erfindungsgemäße Hybridantrieb sowohl bei einem sogenannten Z- Antrieb, das heißt einem Antrieb mit zwei Kegelradstufen im gesamten Ruderpropeller, als auch bei einem sogenannten L-Antrieb, das heißt einem Antrieb mit nur einer Kegelradstufe im gesamten Ruderpropeller Anwendung finden.

Weitere Ausgestaltungen und Einzelheiten des erfindungsgemäßen Hybridantriebs werden nachfolgend anhand von Ausführungsbeispielen in der Zeichnung näher erläutert.

Es zeigen:
- Figur 1: ein Oberwassergetriebe eines erfindungsgemäßen Hybridantriebs in schematisierter Darstellung;
- Figur 2: eine weitere Ausführungsform eines Oberwassergetriebes eines erfindungsgemäßen Hybridantriebs in schematisierter Darstellung;
- Figur 3: die Frontansicht auf einen Torquemotor gemäß der Erfindung.

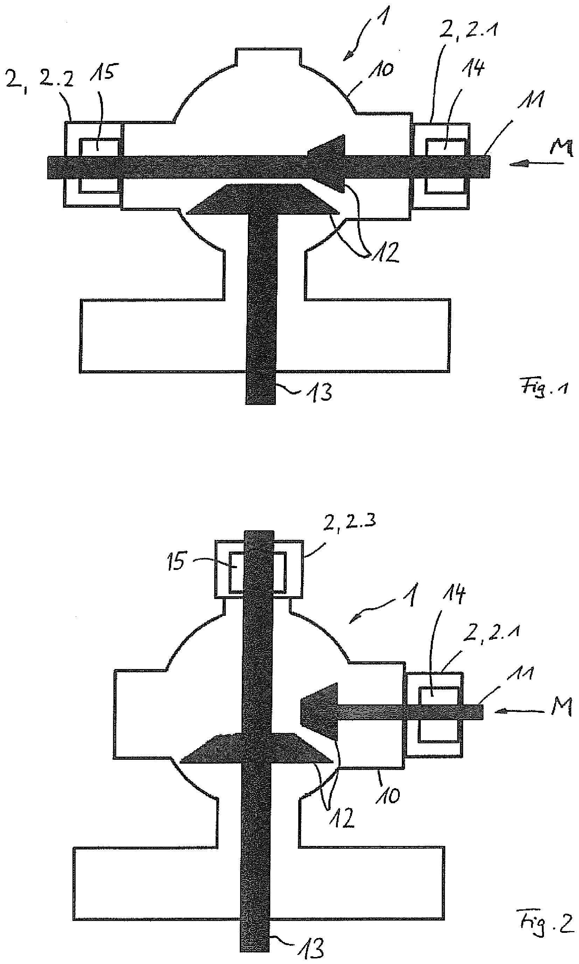

In der Figur 1 ist schematisch ein Oberwassergetriebe eines Hybridantriebes dargestellt, wobei das Oberwassergetriebe 1 eine im Wesentlichen horizontal innerhalb des Getriebegehäuses 10 verlaufende Antriebswelle 11 umfasst, die als L-Antrieb über einen Winkeltrieb 12 mit Kegelrädern eine vertikal verlaufende und aus dem Gehäuse 10 des Oberwassergetriebes 1 herausführende Vertikalwelle 13 antreibt. Die in der Zeichnung dargestellten Komponenten sind dabei üblicherweise im Innern eines nicht dargestellten Wasserfahrzeugs angeordnet.

Die Vertikalwelle 13 führt in nicht näher dargestellter Weise zu einem außerhalb des Wasserfahrzeugs, genauer gesagt unterhalb des Rumpfes angeordneten Ruderpropeller konventioneller Ausführung, wie sie beispielsweise aus der DE 20 2009 009 031 U1 ersichtlich ist.

Die Antriebswelle 11 wird in nicht näher dargestellter Weise mit Leistung und Drehmoment M eines hier nicht dargestellten und ebenfalls im Innern des Wasserfahrzeugs angeordneten Primärantriebsmotors angetrieben, wobei es sich beispielsweise um eine Verbrennungskraftmaschine handelt.

Über eine Kupplung 14 ist die Antriebswelle 11 ein- bzw. auskuppelbar, so dass in Abhängigkeit vom Schaltzustand der Kupplung 14 der Primärantriebsmotor kraftschlüssig mit der Vertikalwelle 13 verbunden oder von dieser entkoppelt werden kann.

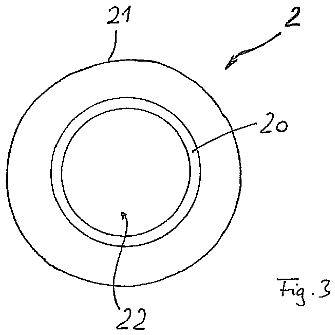

Um nun einen Hybridantrieb mit einem zusätzlich zum Primärantriebsmotor vorgesehenen elektrischen Sekundärantriebsmotor in besonders Platz sparender Bauweise zu schaffen, wird als elektrischer Sekundärantriebsmotor 2 ein aus der Figur 3 in seinen wesentlichen Bauteilen ersichtlicher Torquemotor verwendet, der ein als Stator dienendes Motorgehäuse 21 mit einer darin aufgenommenen drehangetriebenen Hohlwelle 20 aufweist. Innerhalb der drehangetriebenen Hohlwelle 20 ist somit ein Innenraum 22 gebildet, so dass der Torquemotor beispielsweise an geeigneter Stelle auf der Antriebswelle 11 positioniert und mit dieser verbunden werden kann, wenn die Antriebswelle 11 durch den Innenraum 22 verläuft.

Es versteht sich, dass anstelle des Torquemotors auch andere elektrische Sekundärantriebsmotoren 2 mit einer Hohlwelle 20 verwendet werden können.

Mit besonderem Vorteil wird ein solcher als Innenläufer ausgebildeter elektrischer Sekundärantriebsmotor 2 mit seinem Motorgehäuse 21 drehmomentfest mit dem Getriebegehäuse 10 des Oberwassergetriebes 1 verbunden, beispielsweise verschraubt und an einer solchen Stelle positioniert, an der das Oberwassergetriebe 1 mit für die Lagerung und/oder den Betrieb der Antriebswelle 11 bzw. Vertikalwelle 13 erforderlichen zusätzlichen Einbauten, wie Kupplungen 14 oder Bremsen 15 ausgerüstet ist.

So ist aus der Figur 1 mit Bezugsziffer 2.1 eine Einbauposition für den elektrischen Sekundärantriebsmotor 2 schematisch dargestellt, in welcher die drehangetriebene Hohlwelle 20 in ihrem Innenraum 22 die zuvor bereits beschriebene Kupplung 14 der Antriebswelle 11 aufnimmt, d.h. der Sekundärantriebsmotor 2 umschließt die Kupplung 14 an ihrer ohnehin vorgesehenen Einbauposition, ist aber mit einem Kupplungsteil, z.B. dem Gehäuse desselben oder der Krafteingangswelle verdrehfest verbunden.

Auf diese Weise lässt sich ein außerordentlich Platz sparender Einbau des elektrischen Sekundärantriebsmotors 2 realisieren, was beispielsweise auch im Wege der Nachrüstung eines bereits vorhandenen konventionellen Antriebes für das Wasserfahrzeug mit lediglich einem Primärantriebsmotor möglich ist. Bei dieser Anordnung mit innerhalb des Einbauraumes 22 angeordneter Kupplung 14 für die Antriebswelle 11 benötigt der erfindungsgemäß vorgesehene elektrische Sekundärantriebsmotor 2 ferner keine eigene Kupplung, sondern kann je nach Betriebszustand der vorhandenen Kupplung 14 zusätzlich zum Primärantriebsmotor oder alternativ zu diesem den Drehantrieb der Antriebswelle 11 bewirken, so dass es möglich ist, die Antriebsleistung des Primärantriebsmotors mittels des elektrischen Sekundärantriebsmotors zu erhöhen, d.h. einen so genannten Booster-Betrieb zu ermöglichen, wie auch eine rein elektrische Fahrweise zu gewährleisten, die bei geringer abgerufener Last besonders energiesparend und emissionsarm ist.

Alternativ kann der Sekundärantriebsmotor 2 auch an der mit Bezugszeichen 2.2 gekennzeichneten Einbauposition auf der gegenüberliegenden Seite des Getriebegehäuses 10 des Oberwassergetriebes 1 vorgesehen sein, an welchem üblicherweise eine Bremse 15 für die Antriebswelle 11 vorgesehen ist. Auch in dieser Position umschließt der Sekundärantriebsmotor 2 mit seinem Innenraum 22 innerhalb der Hohlwelle 20 die dort vorgesehene Bremse 15 bzw. das dort vorgesehene Drehlager.

Die Figur 2 zeigt eine gegenüber dem Ausführungsbeispiel gemäß Figur 1 abgewandelte Ausführungsform eines Oberwassergetriebes 1, bei welchem die Antriebswelle 11 lediglich in das Getriebegehäuse 10 bis zum Winkeltrieb 12 geführt ist, jedoch auf der gegenüberliegenden Seite des Getriebegehäuses 10 nicht aus diesem herausgeführt ist. Stattdessen ist die Vertikalwelle 13 in diesem Ausführungsbeispiel gemäß Figur 2 im oberen Bereich des Getriebegehäuses 10 aus diesem herausgeführt und dort mit einer Bremse 15 oder auch einem hier nicht dargestellten Drehlager gelagert.

Neben der bereits aus der Figur 1 ersichtlichen und dort auch schon erläuterten Einbauposition 2.1 des elektrischen Sekundärantriebsmotors 2 im Bereich der Kupplung 14 der Antriebswelle 11 besteht im Ausführungsbeispiel der Figur 2 die Möglichkeit, diesen Sekundärantriebsmotor 2 auch an der mit 2.3 gekennzeichneten Einbauposition, d.h. die auf dem Getriebegehäuse 20 sitzende Bremse 15 umschließend vorzusehen, so dass auch hier der Platzbedarf außerordentlichen gering ausfällt.

Allen vorangehend beschriebenen Ausführungsformen ist es zu Eigen, dass der Sekundärantriebsmotor 2 ohne zusätzlichen Zahneingriff im Oberwassergetriebe auskommt, sondern den Zahnantrieb des Primärantriebes gleichermaßen nutzt und ausschließlich die Antriebskomponenten nutzt, die auch bei Betrieb des Primärantriebsmotors im Einsatz sind. Insoweit kommt der Sekundärantriebsmotor auch ohne jedwede eigene Lagerung aus.

Wie bereits erwähnt, eignen sich die vorangehend erläuterten Einbaupositionen 2.1, 2.2, 2.3 für den elektrischen Sekundärantriebsmotor 2 nicht nur bei Neugestaltungen von Oberwassergetrieben für einen Hybridantrieb eines Wasserfahrzeuges, sondern vorhandene Oberwassergetriebe mit lediglich einem Primärantriebsmotor können auf diese Weise mit äußerst geringem baulichen Aufwand und bei geringstem zusätzlichen Platzbedarf zu einem Hybridantrieb umgerüstet werden, so dass beispielsweise eine Nachrüstung von Hafenschleppern, die nur einen begrenzten für das Oberwassergetriebe zur Verfügung stehenden Raum im Schiffsrumpf zur Verfügung haben, problemlos möglich wird.

Da beispielsweise Hafenschlepper in der Regel nur mit 60 - 70 % der zur Verfügung stehenden Gesamtleistung fahren, kann der üblicherweise mit einem Verbrennungsmotor bewirkte Primärantrieb entsprechend kleiner dimensioniert werden, da die nur selten abgerufene Maximalleistung in diesem Fall über den zusätzlich vorhandenen elektrischen Sekundärantrieb bereitgestellt werden kann. In besonderen Umweltzonen kann auch rein elektrisch gefahren werden.

Die vorangehend erläuterte Erfindung bietet darüber hinaus noch weiteres Optimierungspotential. So kann mittels des vorgesehenen elektrischen Sekundärantriebs beispielsweise die Antriebswelle beim Einrücken der Kupplung auf die Schaltdrehzahl beschleunigt werden, bevor die Kupplung 14 eingerückt wird, so dass es möglich wird, auf eine technisch einfachere und preiswertere Schaltkupplung anstelle der bisher verwendeten Schlupfkupplungen zurückzugreifen.

Weiterhin ist es möglich, den elektrischen Sekundärantriebsmotor 2 mit einem zusätzlichen Betriebsmodus zu fahren, in welchem dieser als Generator genutzt wird, um für das Bordnetz des Wasserfahrzeuges Strom bereitzustellen oder aber vorhandene Akkumulatoren zu laden.

Sofern ein Wasserfahrzeug mit mehr als einem derartigen Hybridantrieb, beispielsweise zwei mit solchem Hybridantrieb beaufschlagten Ruderpropellern ausgerüstet ist, besteht die Möglichkeit der elektrischen Kopplung, wobei nur ein Primärantriebsmotor in Betrieb ist, dessen zugeordneter elektrischer Sekundärantriebsmotor im Generatorbetrieb Strom erzeugt und damit den elektrischen Sekundärantriebsmotor des zweiten Ruderpropellers antreibt.

Da die vorangehend erläuterten Oberwassergetriebe eines solches Hybridantriebes lediglich eine Antriebswelle 11 aufweisen müssen, weist ein solches Oberwassergetriebe keine leer mitlaufenden Kegelräder auf, und entsprechend auch keine lastfreie Stellung, so dass die Nachrüstung vorhandener Antriebe auf einfachste Weise möglich wird. Der vorgesehene elektrische Sekundärmotor greift immer an demjenigen Radkörper an, der auch bei Betrieb mit dem Primärantriebsmotor aktiv wäre. Der hierdurch erzielte bauliche Vereinfachungsgrad ist signifikant und führt zu deutlich geringerem Aufwand und zu erheblich verringerten Kosten.

## Patentansprüche

1. Hybridantrieb für ein Wasserfahrzeug, umfassend einen Primärantriebsmotor, der zur Anordnung im Innern des Wasserfahrzeugs vorgesehen ist und eine Antriebswelle (11) antreibt und ein der Antriebswelle (11) nachgeordnetes Oberwassergetriebe (1) mit Getriebegehäuse (10) zum Antrieb einer vom Oberwassergetriebe (1) abgehenden Vertikalwelle (13) sowie mindestens einen elektrischen Sekundärantriebsmotor (2) mit Stator und Rotor, mittels dessen die Vertikalwelle (13) zusätzlich oder alternativ zum Primärantriebsmotor antreibbar ist, **dadurch gekennzeichnet, dass** der mindestens eine elektrische Sekundärantriebsmotor (2) als Innenläufer mit einer drehangetriebenen Hohlwelle (20) und einem als Stator dienenden Motorgehäuse (21) ausgebildet ist und der Stator drehmomentfest mit dem Getriebegehäuse (10) des Oberwassergetriebes (1) verbunden ist und innerhalb der Hohlwelle (20) des Sekundärantriebsmotors (2) eine Kupplung (14) der Antriebswelle (11) angeordnet ist.

2. Hybridantrieb nach Anspruch 1, **dadurch gekennzeichnet, dass** der Sekundärantriebsmotor (2) als permanent erregter Synchronmotor ausgebildet ist.

3. Hybridantrieb nach einem der Ansprüche Ansprüche 1 oder 2, **dadurch gekennzeichnet, dass** der Sekundärantriebsmotor (2) von einem Torquemotor gebildet ist.

4. Hybridantrieb nach einem der Ansprüche 1 bis 3, **dadurch gekennzeichnet, dass** der Sekundärantriebsmotor (2) mit seiner Hohlwelle (20) auf der Antriebswelle (11) angeordnet ist.

5. Hybridantrieb nach einem der Ansprüche 1 bis 4, **dadurch gekennzeichnet, dass** der Sekundärantriebsmotor (2) in einer Betriebsart als Generator betreibbar ist.

6. Hybridantrieb nach einem der Ansprüche 1 bis 5, **dadurch gekennzeichnet, dass** der Sekundärantriebsmotor (2) keine eigene Lagerung aufweist.

## Claims

1. Hybrid drive for a watercraft comprising a primary drive motor which is provided for arrangement in the inside of the watercraft and drives a drive shaft (11) and an overwater gearbox (1) subordinate to the drive shaft (11) with gearbox housing (10) for driving a vertical shaft (13) leading from the overwater gearbox (1) as well as at least one electric secondary drive motor (2) with a stator and rotor, by means of which the vertical shaft (13) can be driven in addition or alternatively to the primary drive motor, **characterised in that** the at least one electric secondary drive motor (2) is designed as an internal rotor with a rotatingly driven hollow shaft (20) and a motor housing (21) serving as the stator and the stator is connected in a torque-tight manner to the gearbox housing (10) of the overwater gearbox (1) and a coupling (14) of the drive shaft (11) is arranged inside the hollow shaft (20) of the secondary drive motor (2).

2. Hybrid drive according to claim 1, **characterised in that** the secondary drive motor (2) is designed as a permanently excited synchronous motor.

3. Hybrid drive according to any one of claims 1 or 2, **characterised in that** the secondary drive motor (2) is formed by a torque motor.

4. Hybrid drive according to any one of claims 1 to 3, **characterised in that** the secondary drive motor (2) is arranged with its hollow shaft (20) on the drive shaft (11).

5. Hybrid drive according to any one of claims 1 to 4, **characterised in that** the secondary drive motor (2) can be operated in one mode of operation as a generator.

6. Hybrid drive according to any one of claims 1 to 5, **characterised in that** the secondary drive motor (2) does not have its own bearing.

## Revendications

1. Propulsion hybride pour un bateau, comprenant un moteur de propulsion primaire, qui est prévu pour être placé à l'intérieur du bateau et qui entraîne un arbre moteur (11), et une transmission hors d'eau (1) avec carter de transmission (10), qui est placée en aval de l'arbre moteur (11) et qui sert à entraîner un arbre vertical (13) partant de la transmission hors d'eau (1), ainsi qu'au moins un moteur de propulsion secondaire (2) électrique, avec rotor et stator, au moyen duquel l'arbre vertical (13) peut être entraîné en supplément ou en remplacement du moteur de propulsion primaire, **caractérisée en ce que** l'au moins un moteur de propulsion secondaire (2) électrique est conçu comme un rotor interne avec un arbre creux (20) entraîné en rotation et avec un carter de moteur (21) qui sert de stator, **en ce que** le stator est assemblé, de manière solidaire quant au couple, au carter de transmission (10) de la transmission hors d'eau (1) et **en ce qu'**un embrayage (14) de l'arbre moteur (11) est agencé à l'intérieur de l'arbre creux (20) du moteur de propulsion secondaire (2).

2. Propulsion hybride selon la revendication 1, **caractérisée en ce que** le moteur de propulsion secondaire (2) est conçu comme un moteur synchrone à excitation permanente.

3. Propulsion hybride selon l'une des revendications 1 ou 2, **caractérisée en ce que** le moteur de propulsion secondaire (2) est formé par un moteur couple.

4. Propulsion hybride selon l'une des revendications 1 à 3, **caractérisée en ce que** le moteur de propulsion secondaire (2) est agencé avec son arbre creux (20) sur l'arbre moteur (11).

5. Propulsion hybride selon l'une des revendications 1 à 4, **caractérisée en ce que** le moteur de propulsion secondaire (2) peut, dans un certain mode de fonctionnement, fonctionner comme un générateur.

6. Propulsion hybride selon l'une des revendications 1 à 5, **caractérisée en ce que** le moteur de propulsion secondaire (2) ne comporte pas de support particulier.
